# EUROPÄISCHE PATENTSCHRIFT

(11) **EP 1 543 252 B1**
(45) Veröffentlichungstag und Bekanntmachung des Hinweises auf die Patenterteilung: **29.03.2006**
(21) Anmeldenummer: 03750615.1
(22) Anmeldetag: 24.09.2003
(51) Int. Cl.: F16D 23/02

(54) **ANORDNUNG VON SYNCHRONRINGEN**
ARRANGEMENT OF SYNCHRONISATION RINGS
SYSTEME D'ANNEAUX SYNCHRONISATEURS

(30) Priorität: 25.09.2002 DE 10244492
(43) Veröffentlichungstag der Anmeldung: 22.06.2005
(73) Patentinhaber: INA-Schaeffler KG, 91074 Herzogenaurach (DE)
(72) Erfinder: BÖSSNER, Ralf, 91217 Hersbruck (DE); MARTIN, Reiner, 96178 Pommersfelden (DE); SCHWUGER, Josef, 91074 Herzogenaurach (DE)
(86) Internationale Anmeldenummer: PCT/EP2003/010616
(87) Internationale Veröffentlichungsnummer: WO 2004/031602

(56) Entgegenhaltungen:
- EP-A- 0 717 212
- EP-A- 1 101 965
- US-A- 4 732 247
- US-A- 5 135 087
- US-B1- 6 324 930

## Beschreibung

### Gebiet der Erfindung

Die Erfindung betrifft eine Anordnung von Synchronringen, die Anordnung mit wenigstens einem um eine Rotationsachse drehbaren ersten Synchronring und mit einem konzentrisch zu dem ersten Synchronring sowie dabei radial zumindest teilweise zwischen der Rotationsachse und dem ersten Synchronring angeordneten zweiten Synchronring, wobei der erste Synchronring zumindest eine nach innen gewandte und dabei in eine der Längsrichtungen der Rotationsachse im Umfang zunehmende Innenfläche aufweist und wobei die Innenfläche eine in die gleiche Längsrichtung im Umfang um die Rotationsachse zunehmende Außenfläche an dem zweiten Synchronring umfangsseitig umfasst.

### Hintergrund der Erfindung

Eine derartige Anordnung ist in EP 0 717 212 A1 beschrieben. Die Synchronringe sind in einer Synchronkupplung zum Schalten von einem oder wahlweise zwei Gangrädern angeordnet. Dabei ist jeweils ein Paket bzw. eine Anordnung von Synchronringen einem Gangrad zugeordnet. Die Anordnung weist mindestens zwei, zumeist jedoch drei Synchronring auf, die längs der Rotationsachse einer Getriebewelle bzw. längs der Rotationsachse der Synchronringe so ineinander geschoben sind, dass ein Außensynchronring einen lnnensynchronring in Umfangsrichtung umfasst. In einer Anordnung aus drei Synchronringen ist radial- zwischen dem Innensynchronring und dem Außensynchronring zumindest teilweise ein Zwischensynchronring angeordnet. Jeder der Synchronringe weist mindestens eine Ringfläche auf, mit der während der Synchronisation der Drehzahlen der Getriebewelle mit den Drehzahlen des zu schaltenden Gangrades ein reibschlüssiger Kontakt zu einer weiteren Ringfläche hergestellt ist. Dabei liegt jeder der Reibflächen an einem der Synchronringe eine Reibfläche des anderen Synchronringes gegenüber. Der Außensynchronring weist dazu an seinem Innenumfang eine Innenfläche auf, der eine Außenfläche an dem Innensynchronring bzw. an dem Zwischensynchronring gegenüberliegt. Der Zwischensynchronring weist außer der äußeren Reibfläche eine innere Reibfläche für den Reibkontakt mit der Außenfläche an dem Innensynchronring auf.

Die Reibflächen sind entweder die Ringflächen oder es sind auf die Ringflächen gesondert Reibflächen in Form von Reibbelägen oder Reibschichten aufgebracht. Der Innen- bzw. Außenumfang ein jeder der Innenflächen bzw. Außenflächen nimmt in eine Längsrichtung der Rotationsachse um die Rotationsachse zu, so dass jede der Flächen z. B. durch die Mantelfläche eines gedachten geraden kreiskegelstumpfes gebildet ist. Die derartig ausgebildeten Flächen sind der Fachwelt auch als Reibkonusse bekannt. Die Synchronringe sind in der Anordnung längs der Rotationsachse so ineinander geschoben, dass die einzelnen Umfänge der miteinander korrespondierenden Flächen um die Rotationsachse in die gleiche Richtung um die Rotationsachse der Anordnung zunehmen. Die längs ineinander geschobenen Synchronringe sind somit über ihre konischen Reibflächen während des Reibkontaktes aneinander zentriert und zueinander konzentrisch angeordnet. Der Innensynchronring ist an dem Zwischensynchronring oder dem Außensynchronring in einer der Längsrichtungen der Rotationsachse an dem Außenring gehalten, da an den längs ineinander gesteckten Synchronringen zumindest der kleinste Innenumfang der Innenfläche kleiner ist als der Umfang der mit der Innenfläche korrespondierenden Außenfläche. In die andere Längsrichtung sind die Synchronringe voneinander lösbar. Die Synchronringe werden einzeln zur Montage in die Synchronkupplung angeliefert und dann zusammengesteckt. Der Aufwand, der für die Lagerung und den Transport sowie für die Montage der einzelnen Ringe betrieben werden muss, ist relativ hoch.

### Zusammenfassung der Erfindung

Die Aufgabe der Erfindung ist es, eine Anordnung von Synchronringen zu schaffen, mit der der Aufwand für die Lagerung und den Transport sowie für die Montage reduziert ist.

Diese Aufgabe ist nach dem Gegenstand des kennzeichnenden Teils des Anspruchs 1 dadurch gelöst, dass sich in der Anordnung an den größten Umfang der Außenfläche in der Längsrichtung der Rotationsachse - in der die Umfänge der einander gegenüberliegenden Flächen um die Rotationsachse zunehmen - ein Halteelement anschließt, wobei das Halteelement zum Halten des zweiten Synchronringes an dem ersten Synchronring vorgesehen ist. Ein derartiges Halteelement ist alternativ in folgenden Anordnungen von Synchronringen vorgesehen:
a) Der erste Synchronring ist gegen den zweiten Synchronring um die Rotationsachse verdrehbar. Dabei stehen der erste Synchronring und der zweite Synchronring zumindest zeitweise - während des Synchronisationsprozesses - reibschlüssig in Kontakt. Einer dieser Synchronringe ist drehfest der Getriebewelle und der andere der Synchronringe ist drehfest einem Gangrad zugeordnet.
b) Der erste und der zweite Synchronring sind durch Formschluss zueinander drehfest angeordnet. Dabei ist die Anordnung aus den zwei Synchronringen entweder drehfest der Getriebewelle oder drehfest einem der Gangräder zugeordnet, während ein Zwischensynchronring zu den vorgenannten Ringen verdrehbar ist.

Der Gegenstand der Erfindung nach Variante a) ist weiter so ausgestaltet, dass der erste Synchronring das Halteelement aufweist. Das Halteelement ist ein aus dem ersten Synchronring radial nach innen hervorstehender und zur Rotationsachse weisender Vorsprung. Der kleinste Umfang der - konisch ausgebildeten - Innenfläche an dem ersten Synchronring ist kleiner als zumindest einer der Umfänge der - konisch ausgebildeten - Außenfläche an dem zweiten Synchronring. Der Vorsprung hintergreift den zweiten Synchronring an einer in die eine Längsrichtung gewandten Stirnseite zumindest teilweise. Weiter ist die Erfindung damit ausgestaltet, dass der Vorsprung einteilig mit dem ersten Synchronring ausgebildet ist.

Eine Ausgestaltung der Variante b) sieht vor, dass der zweite Synchronring einen Grundkörper aus Blech aufweist. Auf dem Grundkörper aus Blech ist die Reibfläche entweder gesondert mit einem Reibbelag aufgebracht oder als Reibbeschichtung vorgesehen bzw. der Grundkörper selbst weist eine einmaterialig mit dem Grundkörper ausgebildete Reibfläche auf. Das Halteelement ist wenigstens ein aus dem zweiten Synchronring hervorstehender Lappen aus dem Blech des zweiten Synchronringes. Der Lappen geht zunächst quer zu der Rotationsachse von dem zweiten Synchronring - radial nach außen - ab und hintergreift dabei den ersten Synchronring an der in die eine Längsrichtung - in welche die Durchmesser der konischen Flächen zunehmen - gewandten Stirnseite des ersten Synchronringes. Der Lappen ist dann in seinem weiteren Verlauf zu der Rotationsachse hin abgewinkelt und übergreift dabei den ersten Synchronring - von der Rotationsachse aus gesehen - in radiale Richtung zumindest teilweise. Dabei hintergreift der abgewinkelte Teil des Lappens den ersten Synchronring an einer zu der Stirnseite des ersten Synchronringes entgegengesetzten Längsrichtung der Rotationsachse, wobei der Lappen z. B. in Richtung der Rotationsachse abgeknickt ist.

Eine weitere Ausgestaltung der Erfindung zu Variante b) sieht vor, dass der erste Synchronring einen quer zu der Rotationsachse nach außen hervorstehenden Bord aufweist. Der Bord weist radial nach außen und ist umfangsseitig wenigstens von zumindest einer sich wenigstens teilweise radial in den Bord erstreckenden Lücke unterbrochen. Der abgewinkelte Teil des Lappens greift in die Lücke ein. Der erste Synchronring und der zweite Synchronring sind mittels des in die Lücke eingreifenden Lappens um die Rotationsachse zueinander drehfest gehalten. Dabei ist der Bord beispielsweise, wie so häufig bei Außensynchronringen, mit einer Verzahnung versehen, wobei die Zähne der Verzahnung radial nach außen aus dem Bord hervorstehen.

Nach Variante b) ist vorgesehen, dass ein dritter Synchronring konzentrisch zu dem zweiten Synchronring und dabei radial zumindest teilweise zwischen dem ersten und dem zweiten Synchronring angeordnet ist. Der erste Synchronring ist demnach ein Außensynchronring, der zweite Synchronring demnach ein Innensynchronring und der dritte Synchronring ist der Zwischensynchronring. Der Zwischensynchronring ist gegenüber dem zweiten und dem ersten Synchronring um die Rotationsachse verdrehbar. Der erste und der zweite Synchronring sind entweder einer Getriebewelle oder dem Gangrad verdrehfest zugeordnet und der Synchronzwischenring ist entsprechend entweder mit dem Gangrad oder mit der Getriebewelle formschlüssig verbunden. Während des Synchronisationsprozesses steht der dritte Synchronring mit einer nach innen gewandten ersten Reibfläche mit der Außenfläche an dem zweiten Synchronring sowie mit einer nach außen gewandten zweiten Reibfläche mit der Innenfläche an dem ersten Synchronring in einem reibschlüssigen Kontakt. Die Synchronringe sind zueinander so angeordnet, dass die Umfänge der ersten Reibfläche sowie der zweiten Reibfläche an dem Zwischensynchronring um die Rotationsachse in die gleiche Längsrichtung zunehmen, in der auch die Umfänge der Innenfläche und der Außenfläche an dem Innen- bzw. Außensynchronring um die Rotationsachse zunehmen. Dabei ist wenigstens der kleinste Umfang der Innenfläche an dem ersten Synchronring kleiner als zumindest einer der Umfänge der Außenfläche an dem dritten Synchronring und weiter der kleinste Umfang der ersten Reibfläche an dem dritten Synchronring kleiner als zumindest einer der Umfänge der Außenfläche an dem zweiten Synchronring. Durch die Anordnung ist der Zwischensynchronring in beide Längsrichtungen, in die die Rotationsachse weist, an wenigstens einem der anderen Synchronringe gehalten.

Ein derartiges Synchronringpaket lässt sich vor der Montage der Synchronringe in die Synchronkupplung vormontieren. Diese Vormontagegruppe ist insbesondere für Synchronringpakete geeignet, bei denen jeder einzelne der zwei oder drei Synchronringe des Synchronringpaketes ein Ziehteil aus Blech ist. Die Halteelemente in Form von Mitnehmern, Vorsprüngen oder Lappen sind einteilig mit dem jeweiligen Synchronring ausgebildet und durch Biegen, Prägen oder ähnliche Verfahren in radiale und/oder in die Längsrichtung der Rotationsachse durchgestellt bzw. gebogen. Die Kosten für den Versand, die Lagerung und die Montage derartiger Ringe sind reduziert.

### Kurze Beschreibung der Zeichnungen

Die Erfindung wird nachfolgend anhand von Ausführungsbeispielen näher erläutert. Es zeigen:
- Figur 1: eine Hauptansicht einer Anordnung aus einem Außensynchronring und einem Innensynchronring,
- Figur 2: einen Längsschnitt entlang der Linie II-II durch die Anordnung der Synchronringe nach Figur 1,
- Figur 3: eine Gesamtansicht einer Anordnung mit drei Synchronringen, wobei die Ansicht teilweise geschnitten dargestellt ist,
- Figur 4: eine Teilansicht des Außensynchronringes aus der Anordnung nach Figur 3.

### Detaillierte Beschreibung der Zeichnungen

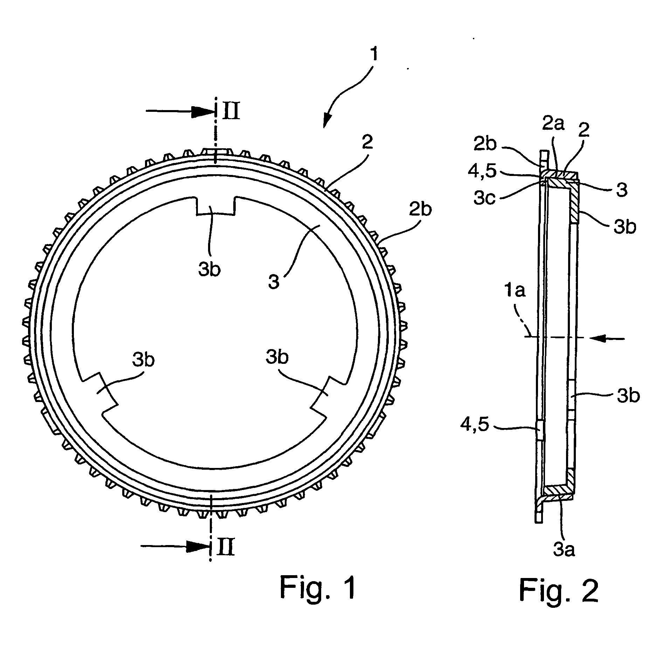

Figur 1 und 2 zeigen in einer Anordnung 1 zwei Synchronringe 2 und 3. Ein erster Synchronring 2 in Form eines Außensynchronringes sowie ein zweiter Synchronring 2 in Form eines Innensynchronringes sind konzentrisch zueinander und um die Rotationsachse 1a der Anordnung drehbar angeordnet. Der zweite Synchronring 3 ist radial zumindest mit einer konisch ausgebildeten Ringfläche zwischen der Rotationsachse 1a und dem ersten Synchronring 2 angeordnet. Der erste Synchronring 2 weist eine nach innen gewandte und dabei in eine, in der Darstellung mit einem Pfeil gekennzeichnete, der Längsrichtungen der Rotationsachse 1a im Umfang um die Rotationsachse 1a zunehmende Innenfläche 2a auf. Die Innenfläche 2a liegt der Außenfläche 3a an dem zweiten Synchronring 3 gegenüber. Der Konuswinkel an dem ersten Synchronring 2 entspricht dem Konuswinkel an dem zweiten Synchronring 3 bzw. weicht geringfügig von diesem ab.

Der zweite Synchronring 3 weist radial zur Rotationsachse 1a weisende Mitnehmer 3b auf, mit denen der zweite Synchronring 3 eine formschlüssigdrehfeste Verbindung mit z. B. einem nicht dargestellten Gangrad eingeht. Der erste Synchronring 2 ist dann formschlüssig-drehfest mit einem nicht dargestellten Schaltmuffenträger der Synchronkupplung verbunden, so dass der erste Synchronring 2 sowie der zweite Synchronring 3 gegeneinander um die Rotationsachse 1a verdrehbar und während der Synchronisation reibschlüssig in Kontakt sind. Der erste Synchronring 2, in Form eines Außensynchronringes, weist einen radial nach außen hervorstehenden Bord 2b mit einer Verzahnung auf. Der Bord 2b schließt sich in der Anordnung 1 an den größten Umfang der Innenfläche 2a an. Aus dem Bord 2b sind mindestens drei am Umfang des ersten Synchronringes 2 verteilt angeordnete Halteelemente 4 ausgearbeitet. Die Halteelemente 4, von denen nur zwei bildlich in Figur 2 dargestellt sind, weisen radial nach innen und hintergreifen dabei den zweiten Synchronring 3 längs an seiner Stirnseite 3c. Der als zweiter Synchronring 3 bezeichnete Innensynchronring ist über die als Außenfläche 3a bezeichnete konische Reibfläche in dem Außensynchronring zur Rotationsachse 1a zentriert. Dabei stützt sich in dem Paket und während der Synchronisation die Außenfläche 3a innen an der als Innenfläche 2a bezeichneten konischen Reibfläche des ersten Synchronringes 2 in radialer Richtung sowie in die zur Pfeilrichtung entgegengesetztes Längsrichtung der Rotationsachse 1a ab. Der Innensynchronring ist mittels der Vorsprünge 5 an dem Außensynchronring gesichert.

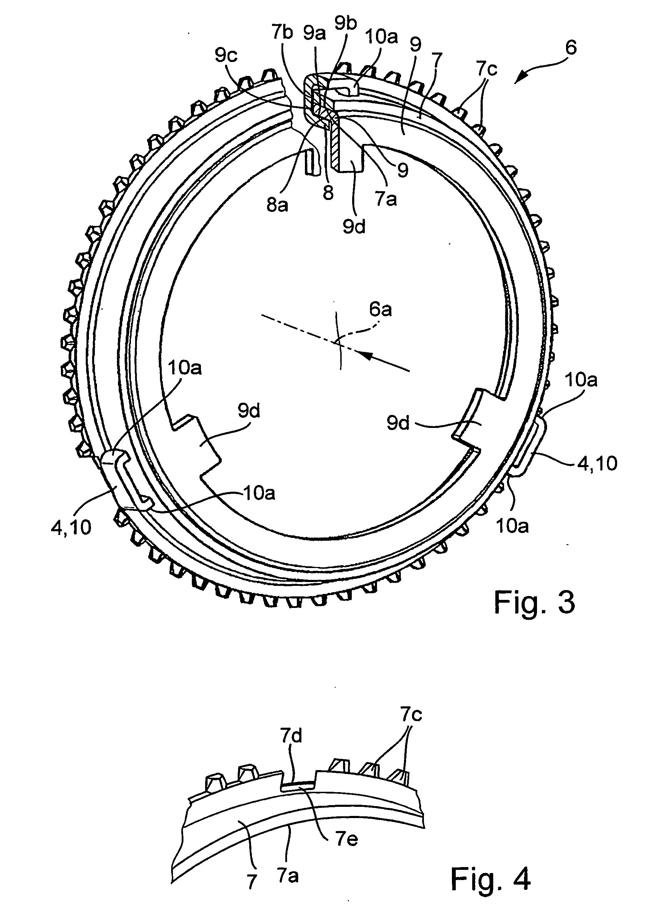

Figur 3 zeigt eine Anordnung 6 von Synchronringen 7, 8, 9. Der erste Synchronring 7 ist ein Außensynchronring und der zweite Synchronring 8 ein Innensynchronring. Der dritte Synchronring 9, ein Zwischensynchronring, ist radial zumindest mit konischen Reibflächen 9a, 9b zwischen dem ersten Synchronring 7 und dem zweiten Synchronring 8 angeordnet. Dabei ist der dritte Synchronring 9 über eine nach innen gewandte erste Reibfläche 9a an einer Außenfläche 8a des zweiten Synchronringes 8 bzw. über eine nach außen gewandte zweite Reibfläche 9b an einer Innenfläche 7a des ersten Synchronringes 7 zur Rotationsachse 6a während des Transportes des Synchronringpaketes sowie während der Synchronisation zentriert. Die Flächen 7a, 8a, 9a und 9b sind die konischen Mantelflächen von gedachten geraden Kreiskegelstümpfen, deren Umfänge in die, in der Darstellung nach Figur 3 mit dem Pfeil gekennzeichnete, Längsrichtung der Rotationsachse 6a um die Rotationsachse 6a zunehmen.

Der dritte Synchronring 9 ist in der Anordnung 6 in die zur Pfeilrichtung entgegengesetzte Längsrichtung an dem ersten Synchronring 7 gehalten, da der kleinste Umfang der Innenfläche 7a kleiner ist als zumindest der größte Umfang der ersten Reibfläche 9a. In die mit dem Pfeil gekennzeichnete Längsrichtung der Rotationsachse 6a sind die Synchronringe über ein Halteelement 4 aneinander gehalten. Das Halteelement 4 ist ein Lappen 10 aus dem Blech des zweiten Synchronringes 8. Der Lappen 10 ist einteilig mit dem zweiten Synchronring 8 ausgebildet, wobei der zweite Synchronring 8 sowie die Synchronringe 7 und 9 aus Blech geformt sind. Das Halteelement 4 schließt sich in der Anordnung 6 in der mit dem Pfeil gekennzeichneten Längsrichtung der Rotationsachse 6a an dem größten Umfang der Außenfläche 8a an und geht von da zunächst in radiale Richtung nach außen ab. Dabei hintergreift der Lappen 10 die Stirnseiten 9c des dritten Synchronringes 9 sowie die Stirnseite 7b des ersten Synchronringes 7. In seinem weiteren Verlauf ist der Lappen 10 von der gekennzeichneten Längsrichtung wegweisend abgewinkelt und übergreift dabei den ersten Synchronring 7. Der erste Synchronring 7 ist ein Außensynchronring mit einer Sperrverzahnung 7c an einem radial nach außen gehenden Bord des ersten Synchronringes 7.

Die Sperrverzahnung 7c und teilweise der Bord sind umfangsseitig von drei Lücken 7d (Figur 4) unterbrochen, in die jeweils der übergreifende Teil des Lappens 10 eingreift. Der erste Synchronring 7 und der zweite Synchronring 8 sind mittels des formschlüssigen Eingriffs des Lappens 10 in die Lücke 7d miteinander drehfest verbunden. Der dritte Synchronring 9 ist relativ zu den Synchronringen 7 und 8 um die Rotationsachse 6a verdrehbar. An dem übergreifenden Teil des Lappens 10 sind in beide Umfangsrichtungen weisende Flanken 10a ausgebildet. Dazu ist das Blech der Lappen 10 nach innen weisend abgekantet. Der verbleibende Anteil 7e des Bordes in der Lücke 7d ist durch die Flanken 10a. des Lappens 10 in der zur gekennzeichneten Richtung entgegengesetzten Längsrichtung hintergriffen, so dass die Synchronringe 8 und 9 in dem Synchronring 7 gehalten sind. Der erste Synchronring 7 und damit der zweite Synchronring 8 sind über den Lappen 10 formschlüssig mit beispielsweise einem nicht dargestellten Schaltmuffenträger drehfest verbunden. Der dritte Synchronring 9 ist in diesem Fall über die Mitnehmer 9d formschlüssig-drehfest einem nicht dargestellten Gangrad zugeordnet.

### Bezugszeichen

- 1: Anordnung
- 1 a: Rotationsachse
- 2: erster Synchronring
- 2a: Innenfläche
- 2b: Bord
- 3: zweiter Synchronring
- 3a: Außenfläche
- 3b: Mitnehmer
- 3c: Stirnseite
- 4: Halteelement
- 5: Vorsprung
- 6: Anordnung
- 6a: Rotationsachse
- 7: erster Synchronring
- 7a: Innenfläche
- 7b: Stirnseite
- 7c: Verzahnung
- 7d: Lücken
- 7e: Anteil
- 8: zweiter Synchronring
- 8a: Außenfläche
- 9: dritter Synchronring
- 9a: erste Reibfläche
- 9b: zweite Reibfläche
- 9c: Stirnseite
- 9d: Mitnehmer
- 10: Lappen
- 10a: Flanken

## Patentansprüche

1. Anordnung (1, 6) von Synchronringen (2, 3, 7, 8, 9), die Anordnung (1, 6) mit wenigstens einem um eine Rotationsachse (1a, 6a) drehbaren ersten Synchronring (2, 7) und mit einem konzentrisch zu dem ersten Synchronring (2, 7) und dabei radial zumindest teilweise zwischen der Rotationsachse (1 a, 6a) und dem ersten Synchronring (2, 7) angeordneten zweiten Synchronring (3, 8), wobei der erste Synchronring (2) zumindest eine nach innen gewandte und dabei in eine der Längsrichtungen der Rotationsachse (1 a, 6a) um die Rotationsachse (1 a, 6a) im Umfang zunehmende Innenfläche (2a, 7a) aufweist und wobei die Innenfläche (2a, 7a) eine in die gleiche Längsrichtung um die Rotationsachse (1a, 6a) im Umfang zunehmende Außenfläche (3a, 8a) an dem zweiten Synchronring (3, 8) umfangsseitig umfasst, **dadurch gekennzeichnet, dass** sich in der Anordnung (1, 6) an den größten Umfang der Außenfläche (3a, 8a) in der Längsrichtung der Rotationsachse (1 a, 6a) ein Halteelement (4) anschließt, wobei das Halteelement (4) zum Halten des zweiten Synchronringes (3, 8) an dem ersten Synchronring (2, 7) vorgesehen ist.

2. Anordnung nach Anspruch 1, **dadurch gekennzeichnet, dass** der erste Synchronring (2) gegen den zweiten Synchronring (3) um die Rotationsachse (1a) verdrehbar ist, wobei der erste Synchronring (2) und der zweite Synchronring (3) zumindest zeitweise in einem Reibkontakt stehen.

3. Anordnung nach Anspruch 2, **dadurch gekennzeichnet, dass** der erste Synchronring (2) das Halteelement (4) aufweist und dass das Halteelement (4) ein aus dem ersten Synchronring (2) radial nach innen hervorstehender Vorsprung (5) ist, wobei wenigstens der kleinste Umfang der Innenfläche (2a) an dem ersten Synchronring (2) kleiner ist als zumindest einer der Umfänge der Außenfläche (3a) an dem zweiten Synchronring (3), und wobei der Vorsprung (5) den zweiten Synchronring (3) an einer in die eine Längsrichtung gewandten Stirnseite (3c) zumindest teilweise hintergreift.

4. Anordnung nach Anspruch 3, **dadurch gekennzeichnet, dass** der Vorsprung (5) einteilig mit dem ersten Synchronring (2) ausgebildet ist.

5. Anordnung nach Anspruch 1, **dadurch gekennzeichnet, dass** der erste Synchronring (7) und der zweite Synchronring (8) zueinander drehfest angeordnet sind.

6. Anordnung nach Anspruch 5, **dadurch gekennzeichnet, dass** wenigstens der zweite Synchronring (8) der Synchronringe (7, 8, 9) einen Grundkörper aus Blech aufweist, wobei das Halteelement (4) wenigstens ein aus dem zweiten Synchronring (8) hervorstehender Lappen (10) aus dem Blech des zweiten Synchronringes (8) ist und wobei der Lappen (10) zunächst quer zu der Rotationsachse (6a) von dem zweiten Synchronring (8) abgeht und dabei den ersten Synchronring (7) an der in die Längsrichtung gewandten Stirnseite (7b) des ersten Synchronringes (7) hintergreift und dass der Lappen (10) dann in seinem weiteren Verlauf abgewinkelt ist und dabei den ersten Synchronring (7) in radialer Richtung zumindest teilweise übergreift sowie den ersten Synchronring (7) an einer zur der Stirnseite (7b) des ersten Synchronringes (7) entgegengesetzten Längsrichtung der Rotationsachse (6a) teilweise hintergreift.

7. Anordnung nach Anspruch 6, **dadurch gekennzeichnet, dass** wenigstens der kleinste Umfang der Innenfläche (7a) an dem ersten Synchronring (7) kleiner ist als zumindest einer der Umfänge der Außenfläche (8a) an dem zweiten Synchronring (8).

8. Anordnung nach Anspruch 6, **dadurch gekennzeichnet, dass** der erste Synchronring (7) einen quer zu der Rotationsachse (6a) nach außen hervorstehenden Bord aufweist und dass der Bord umfangsseitig von wenigstens einer Lücke (7d) zumindest teilweise unterbrochen ist und wobei der Lappen (10) in die Lücke (7d) eingreift.

9. Anordnung nach Anspruch 8, **dadurch gekennzeichnet, dass** der Bord mit einer Verzahnung (7c) versehen ist.

10. Anordnung nach Anspruch 8, **dadurch gekennzeichnet, dass** die Anordnung (6) einen dritten Synchronring (9) aufweist, wobei der dritte Synchronring (9) konzentrisch zu dem zweiten Synchronring (8) und dabei radial zumindest teilweise zwischen dem ersten Synchronring (7) und dem zweiten Synchronring (8) angeordnet ist und wobei der dritte Synchronring (9) gegenüber dem ersten Synchronring (7) und dem zweiten Synchronring (8) um die Rotationsachse (6a) verdrehbar ist, und dass der dritte Synchronring (9) mit einer nach innen gewandten ersten Reibfläche (9a) mit der Außenfläche (8a) sowie mit einer nach außen gewandten zweiten Reibfläche (9b) mit der Innenfläche (7a) zumindest zeitweise in dem Reibkontakt steht und dabei die Umfänge der ersten Reibfläche (9a) sowie der zweiten Reibfläche (9b) um die Rotationsachse (6a) in die gleiche Längsrichtung zunehmen, in der auch die Umfänge der Innenfläche (7a) und der Außenfläche (8a) um die Rotationsachse (6a) zunehmen, wobei wenigstens der kleinste Umfang der Innenfläche (7a) an dem ersten Synchronring (7) kleiner ist als zumindest einer der Umfänge der zweiten Reibfläche (9b) an dem dritten Synchronring (9) und wobei zumindest der kleinste Umfang der ersten Reibfläche (9a) an dem dritten Synchronring (9) kleiner ist als zumindest einer der Umfänge der Außenfläche (8a) an dem zweiten Synchronring (8).

## Claims

1. Arrangement (1, 6) of synchroniser rings (2, 3, 7, 8, 9), said arrangement (1, 6) comprising at least a first synchroniser ring (2, 7) that can rotate about an axis of rotation (1a, 6a) and a second synchroniser ring (3, 8) that is concentric with the first synchroniser ring (2, 7) and is arranged radially at least partially between the axis of rotation (1a, 6a) and the first synchroniser ring (2, 7), which first synchroniser ring (2) comprises at least one inwards oriented inner surface (2a, 7a), the circumference of which increases around the axis of rotation (1a, 6a) in one of the longitudinal directions of the axis of rotation (1a, 6a) and said inner surface (2a, 7a) circumferentially surrounding an outer surface (3a, 8a) of the second synchroniser ring (3, 8), the circumference of which outer surface (3a, 8a) increases in the same longitudinal direction around the axis of rotation (1a, 6a), **characterised in that**, in the arrangement (1,6), a retaining element (4) is connected in the longitudinal direction of the axis of rotation (1a, 6a) to the largest circumference of the outer surface (3a, 8a), which retaining element (4) is intended for the retention of the second synchroniser ring (3, 8) on the first synchroniser ring (2, 7).

2. Arrangement according to claim 1, **characterised in that** the first synchroniser ring (2) can rotate relative to the second synchroniser ring (3) about the axis of rotation (1a), the first synchroniser ring (2) and the second synchroniser ring (3) being at least intermittently in frictional contact with each other.

3. Arrangement according to claim 2, **characterised in that** the first synchroniser ring (2) comprises the retaining element (4) and the retaining element (4) is a projection (5) protruding radially inwards from the first synchroniser ring (2), at least the smallest circumference of the inner surface (2a) of the first synchroniser ring (2) is smaller than at least one of the circumferences of the outer surface (3a) of the second synchroniser ring (3), and the projection (5) engages at least partially behind the second synchroniser ring (3) on a front end (3c) oriented in the one longitudinal direction.

4. Arrangement according to claim 3, **characterised in that** the projection (5) is made in one piece with the first synchroniser ring (2).

5. Arrangement according to claim 1, **characterised in that** the first synchroniser ring (7) and the second synchroniser ring (8) are arranged fixed in rotation relative to each other.

6. Arrangement according to claim 5, **characterised in that** at least the second synchroniser ring (8) of the synchroniser rings (7, 8, 9) comprises a base body made of sheet metal, the retaining element (4) is at least one tab (10) projecting from the second synchroniser ring (8) and is made out of the sheet metal of the second synchroniser ring (8), the tab (10) projects from the second synchroniser ring (8), at first crosswise to the axis of rotation (6a), while engaging behind the first synchroniser ring (7) on the front end (7b) of the first synchroniser ring (7) that is oriented in the longitudinal direction, and that the tab (10) is then bent at an angle so that it engages in radial direction at least partially over the first synchroniser ring (7) and engages at least partially behind the first synchroniser ring (7) in a longitudinal direction of the axis of rotation (6a) opposed to the front end (7b) of the first synchroniser ring (7).

7. Arrangement according to claim 6, **characterised in that** at least the smallest circumference of the inner surface (7a) of the first synchroniser ring (7) is smaller than at least one of the circumferences of the outer surface (8a) of the second synchroniser ring (8).

8. Arrangement according to claim 6, **characterised in that** the first synchroniser ring (7) comprises a rim projecting outwards crosswise to the axis of rotation (6a), the rim is interrupted at least partially in the peripheral direction by at least one gap (7d), and the tab (10) engages into the gap (7d).

9. Arrangement according to claim 8, **characterised in that** the rim is provided with a gearing (7c).

10. Arrangement according to claim 8, **characterised in that** the arrangement (6) comprises a third synchroniser ring (9), which third synchroniser ring (9) is concentric with the second synchroniser ring (8) and is arranged radially at least partially between the first synchroniser ring (7) and the second synchroniser ring (9), the third synchroniser ring (9) is capable of rotating about the axis of rotation (6a) relative to the first synchroniser ring (7) and the second synchroniser ring (8), the third synchroniser ring (9) is at least intermittently in frictional contact through an inwards oriented first friction surface (9a) with the outer surface (8a) and through an outwards oriented second friction surface (9b) with the inner surface (7a), the circumferences of the first friction surface (9a) and the second friction (9b) increase in the same direction around the axis of rotation (6a) as the circumferences of the inner surface (7a) and the outer surface (8a) likewise increase around the axis of rotation (6a), at least the smallest circumference of the inner surface (7a) of the first synchroniser ring (7) is smaller than at least one of the circumferences of the second friction surface (9b) of the third synchroniser ring (9), and at least the smallest circumference of the first friction surface (9a) of the third synchroniser ring (9) is smaller that at least one of the circumferences of the outer surface (8a) of the second synchroniser ring (8).

## Revendications

1. Agencement (1, 6) d'anneaux de synchronisation (2, 3, 7, 8, 9), ledit agencement (1, 6) comprenant au moins un premier anneau de synchronisation (2, 7) qui peut tourner autour d'un axe de rotation (1a, 6a), et un second anneau de synchronisation (3, 8) qui est concentrique au premier anneau de synchronisation (2, 7) en étant agencé radialement, au moins partiellement, entre l'axe de rotation (1a, 6a) et le premier anneau de synchronisation (2, 7), le premier anneau de synchronisation (2) comprenant au moins une surface intérieure (2a, 7a) qui est orientée vers l'intérieur et dont la circonférence s'augmente autour de l'axe de rotation (1a, 6a) dans l'une des directions longitudinales de l'axe de rotation (1a, 6a), et cette surface intérieure (2a, 7a)) entoure en direction périphérique, une surface extérieure (3a, 8a) du second anneau de synchronisation (3, 8), la circonférence de cette surface extérieure (3a, 8a) s'augmentant autour de l'axe de rotation (1a, 6a) dans la même direction longitudinale que la surface intérieure (2a, 7a), **caractérisé en ce que**, dans l'agencement (1, 6), un élément de retenue (4) se raccorde à la plus grande circonférence de la surface extérieure (3a, 8a) dans la direction longitudinale de l'axe de rotation (1a, 6a), cet élément de retenue (4) étant prévu pour la retenue du second anneau de synchronisation (3, 8) sur le premier anneau de synchronisation (2, 7).

2. Agencement selon la revendication 1, **caractérisé en ce que** le premier anneau de synchronisation (2) peut tourner par rapport au second anneau de synchronisation (3) autour de l'axe de rotation (1a), le premier anneau de synchronisation (2) et le second anneau de synchronisation (3) étant en contact de friction, l'un avec l'autre, au moins de manière intermittente.

3. Agencement selon la revendication 2, **caractérisé en ce que** le premier anneau de synchronisation (2) comprend l'élément de retenue (4) et cet élément de retenue (4) est une saillie (5) qui s'étend radialement vers l'intérieur à partir du premier anneau de synchronisation (2), au moins la plus petite circonférence de la surface intérieure (2a) du premier anneau de synchronisation (2) étant inférieure à au moins l'une des circonférences de la surface extérieure (3a) du second anneau de synchronisation (3), et la saillie (5) s'engage, au moins partiellement, derrière le second anneau de synchronisation (3) sur un côté frontal (3c) orienté dans l'une direction longitudinale.

4. Agencement selon la revendication 3, **caractérisé en ce que** la saillie (5) est faite en une seule pièce avec le premier anneau de synchronisation (2).

5. Agencement selon la revendication 1, **caractérisé en ce que** le premier anneau de synchronisation (7) et le second anneau de synchronisation (8) sont immobilisés en rotation, l'un par rapport à l'autre.

6. Agencement selon la revendication 5, **caractérisé en ce que**, au moins le second anneau de synchronisation (8) parmi les anneaux de synchronisation (7, 8, 9) a un corps de base en tôle, l'élément de retenue (4) est au moins une patte (10) qui fait saillie à partir du second anneau de synchronisation (8) et est faite en la tôle du second anneau de synchronisation (8), la patte (10) s'étend à partir du second anneau de synchronisation (8), d'abord en travers de l'axe de rotation (6a), en s'engageant derrière le premier anneau de synchronisation (7) sur le côté frontal (7b) du premier anneau de synchronisation (7) qui est orienté dans l'une direction longitudinale, et que la patte (10) est ensuite repliée et s'engage en direction radiale, au moins partiellement, par-dessus le premier anneau de synchronisation (7) et s'engage, aussi, dans la direction longitudinale de l'axe de rotation (6a) opposée au côté frontal (7b) du premier anneau de synchronisation (7), au moins partiellement, derrière le premier anneau de synchronisation (7)

7. Agencement selon la revendication 6, **caractérisé en ce que**, au moins la plus petite circonférence de la surface intérieure (7a) du premier anneau de synchronisation (7) est inférieure à au moins l'une des circonférences de la surface extérieure (8a) du second anneau de synchronisation (8).

8. Agencement selon la revendication 6, **caractérisé en ce que** le premier anneau de synchronisation (7) comprend un bord faisant saillie en travers de l'axe de synchronisation (6a) vers l'extérieur, ce bord est interrompue au moins partiellement en direction périphérique par au moins un intervalle (7d), et la patte (10) s'engage dans cet intervalle (7d).

9. Agencement selon la revendication 8, **caractérisé en ce que** le bord est muni d'une denture (7c).

10. Agencement selon la revendication 8, **caractérisé en ce que** l'agencement (6) comprend un troisième anneau de synchronisation (9) qui est concentrique au second anneau de synchronisation (8) en étant agencé radialement, au moins partiellement, entre le premier anneau de synchronisation (7) et le second anneau de synchronisation (8), le troisième anneau de synchronisation (9) est mobile en rotation autour l'axe de synchronisation (6a) par rapport au premier anneau de synchronisation (7) et par rapport au second anneau de synchronisation (8), et que le troisième anneau de synchronisation (9) est en contact de friction par une première surface de friction (9a) orientée vers l'intérieur avec la surface extérieure (8a) et par une deuxième surface de friction (9b) avec la surface intérieure (7a), au moins de manière intermittente, les circonférences de la première surface de friction (9a) et de la deuxième surface de friction (9a) s'augmentant dans la même direction longitudinale autour de l'axe de rotation (6a) dans laquelle s'augmentent, également, les circonférences de la surface intérieure (7a) et de la surface extérieure (8a) autour de l'axe de rotation (6a), au moins la plus petite circonférence de la surface intérieure (7a) du premier anneau de synchronisation (7) étant inférieure à, au moins, l'une des circonférences de la deuxième surface de friction (9b) du troisième anneau de synchronisation (9) et, au moins, la plus petite circonférence de la première surface de friction (9a) du troisième anneau de synchronisation (9) étant inférieure à, au moins, l'une des circonférences de la surface extérieure (8a) du second anneau de synchronisation (8).
